# EUROPEAN PATENT SPECIFICATION

(11) **EP 3 098 415 B1**
(45) Date of publication and mention of the grant of the patent: **04.09.2019**
(21) Application number: 15737658.3
(22) Date of filing: 16.01.2015
(51) Int. Cl.: F02B 25/04, F02B 37/00, F02B 37/02, F02M 26/00, F02D 41/14, F02B 7/06, F02B 7/08, F02B 25/20, F02M 21/02, F02D 9/04, F02D 19/10, F02D 41/00, F02M 26/07

(54) **UNIFLOW SCAVENGING 2-CYCLE ENGINE**
ZWEITAKTMOTOR MIT GLEICHSTROMSPÜLUNG
MOTEUR À DEUX TEMPS À BALAYAGE ÉQUICOURANT

(30) Priority: 17.01.2014 JP 2014006402
(43) Date of publication of application: 30.11.2016
(73) Proprietor: IHI Corporation, Tokyo 135-8710 (JP)
(72) Inventor: MASUDA Yutaka, Tokyo 135-8710 (JP); KUGE Takahiro, Tokyo 135-8710 (JP); HIROSE Takayuki, Tokyo 135-8710 (JP); YAMADA Takayuki, Tokyo 135-8710 (JP); YAMADA Takeshi, Tokyo 135-8710 (JP)
(74) Representative: TBK
(86) International application number: PCT/JP2015/051062
(87) International publication number: WO 2015/108144

(56) References cited:
- EP-A1- 2 098 708
- DE-A1-102006 047 515
- JP-A- 2003 138 943
- JP-A- 2013 545 923
- JP-U- S5 965 930
- US-B2- 8 549 854

## Description

### [Technical Field]

The present invention relates to a uniflow scavenging 2-cycle engine which burns a fuel gas.

### [Background Art]

In uniflow scavenging 2-cycle engines (two stroke engines) used as engines of ships, an exhaust port is provided at a side of one end of a cylinder in a stroke direction of a piston, and scavenge ports are provided at a side of the other end of the cylinder in the stroke direction of the piston. When an active gas is suctioned into a combustion chamber from the scavenge ports in an intake stroke, exhaust gas generated due to a combustion operation is extruded and discharged from the exhaust port due to the suctioned active gas.

In such uniflow scavenging 2-cycle engines, exhaust valves configured to open and close the exhaust ports are provided to control valve opening timings and valve closing timings of the exhaust valves according to load conditions and operation conditions of the engines disclosed in, for example, Patent Documents JP H03-061 611 A and JP H06-035 830 A.

Furthermore, a uniflow scavenging 2-cycle engine according to the preamble of claim 1 is disclosed in EP 2 098 708 A1. Further uniflow scavenging 2-cycle engines are known from US 8 549 854 B2 and DE 10 2006 047515 A1.

### [Summary of Invention]

### [Technical Problem]

An active gas suctioned from scavenge ports is also slightly discharged from an exhaust port together with an exhaust gas in a cylinder when the exhaust gas is to be prevented from staying in the cylinder so that the exhaust gas is reliably discharged in a scavenging process in which the exhaust gas is replaced with air (the active gas). A premixed fuel gas is also likely to be discharged while the active gas is discharged as described above.

Therefore, it is considered that a period of time at which the fuel gas is injected is limited to a short period of time just before a closing timing of the exhaust valve to prevent the fuel gas from being discharged. If the injection period of time of the fuel gas is limited, a large amount of fuel gas should be injected in the short period of time and the fuel gas is not sufficiently mixed with the active gas so that the fuel gas cannot be dispersed over a wide area in the combustion chamber.

The present invention was made in view of the above-described problems, and an object of the present invention is to provide a uniflow scavenging 2-cycle engine capable of suppressing a fuel gas from being discharged and sufficiently mixing the fuel gas with an active gas to disperse the fuel gas in a combustion chamber.

### [Solution to Problem]

In order to solve the above problems, a uniflow scavenging 2-cycle engine of the present invention includes: a cylinder having a combustion chamber formed therein; a piston configured to slide in the cylinder; an exhaust port provided at a side of one end of the cylinder in a stroke direction of the piston; a first exhaust valve configured to open and close the exhaust port; an exhaust passage communicating with the exhaust port and through which an exhaust gas generated due to a combustion operation in the cylinder is guided from the exhaust port; and a second exhaust valve provided in the exhaust passage and configured to vary a degree of opening of the exhaust passage.

Also, the uniflow scavenging 2-cycle engine of the present invention further includes: a control unit configured to control the first exhaust valve and the second exhaust valve to reduce a degree of opening of the second exhaust valve after the first exhaust valve is opened.

The uniflow scavenging 2-cycle engine of the present invention further comprises: a sensor provided in the exhaust passage and configured to measure an oxygen concentration contained in the exhaust gas, wherein the control unit reduces the degree of opening of the second exhaust valve when the oxygen concentration measured by the sensor increases to exceed a threshold value after the first exhaust valve is opened.

The uniflow scavenging 2-cycle engine of the present invention may further include: scavenge ports provided at a side of the other end of the cylinder in the stroke direction of the piston and configured to suction an active gas to the combustion chamber
according to a sliding motion of the piston; a circulation passage communicating the exhaust passage with the scavenge ports and configured to circulate a part of the exhaust gas circulating in the exhaust passage from the scavenge ports into the cylinder; and a third exhaust valve configured to open and close the circulation passage, wherein the second exhaust valve may be provided at a downstream side in the exhaust passage from a communicating portion of the exhaust passage and the circulation passage.

### [Effects of Invention]

According to the uniflow scavenging 2-cycle engine of the present invention, it is possible to suppress a fuel gas from being discharged and sufficiently mix the fuel gas with the active gas to disperse the fuel gas in the combustion chamber.

### [Brief Description of Drawings]

FIG. 1 is a view showing an overall constitution of a uniflow scavenging 2-cycle engine.
FIG. 2A is a view showing g a second fuel injection unit.
FIG. 2B is an enlarged view of a broken line portion of FIG. 2A.
FIG. 3 is a view showing a suction and exhaust system of the uniflow scavenging 2-cycle engine.
FIG. 4A is a view showing operations of each control unit according to crank angles.
FIG. 4B is a view showing operations of each of the control units according to crank angles.
FIG. 5A is a view showing a second fuel injection unit in a modified example of the present invention.
FIG. 5B is an enlarged view of a broken line portion of FIG. 5A.

### [Description of Embodiments]

Hereinafter, a preferred embodiment of the present invention will be described in detail with reference to the accompanying drawings. A dimension, a material, other specific numerical values, etc. represented in such an embodiment are merely exemplified to facilitate the understanding of the invention and are not intended to limit the present invention unless particularly stated. Note that constituent elements having substantially the same functions and constitutions in the specification and the drawings are denoted by the same reference numerals and overlapping descriptions thereof will be omitted. In addition, constituent elements having no direct relation with the present invention are not shown.

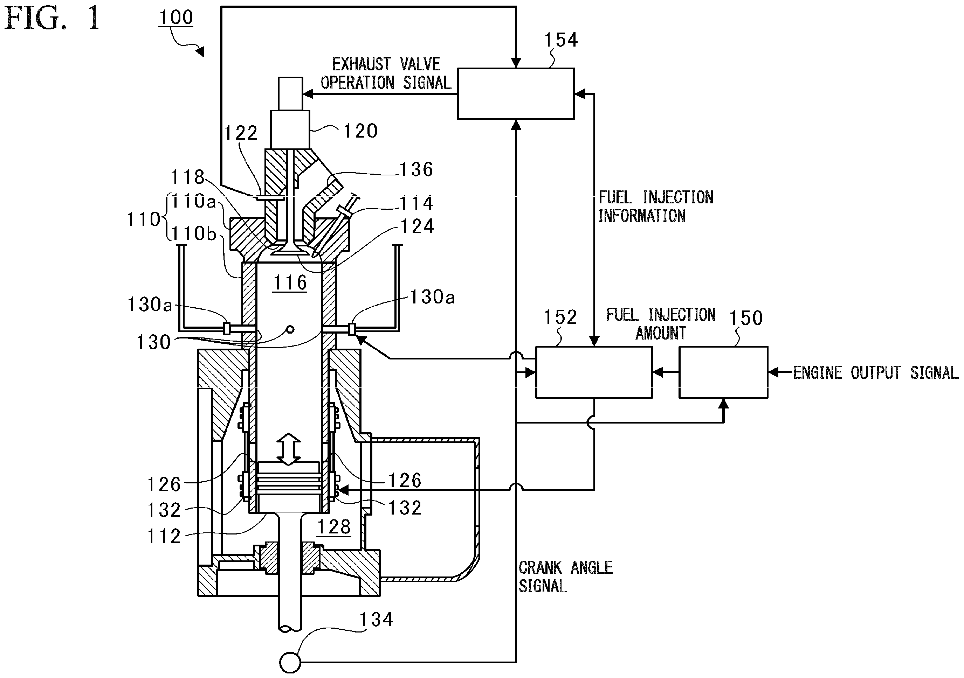

FIG. 1 is a view showing an overall constitution of a uniflow scavenging 2-cycle engine 100. The uniflow scavenging 2-cycle engine 100 in the embodiment is used in, for example, a ship, and so on. To be specific, the uniflow scavenging 2-cycle engine 100 includes a cylinder 110 (a cylinder head 110a and a cylinder block 110b), a piston 112, a pilot injection valve 114, a combustion chamber 116, an exhaust port 118, an exhaust valve driving device 120, a sensor 122, a first exhaust valve 124, scavenge ports 126, a scavenge chamber 128, first fuel injection units 130, a second fuel injection unit 132, a rotary encoder 134, and an exhaust passage 136 and is controlled by control units such as a governor (a speed regulator) 150, a fuel injection control unit 152, and an exhaust control unit 154 (a control unit).

In the uniflow scavenging 2-cycle engine 100, combustion, expansion, exhaust, intake, and compression are performed during two strokes, i.e., an upward stroke and a downward stroke of the piston 112, and the piston 112 connected to a cross head (not shown) slidably reciprocates in the cylinder 110. Since a stroke can be formed to be relatively long in the cylinder 110 and the cross head which can receive a lateral pressure applied to the piston 112 in such a cross head type piston 112, the uniflow scavenging 2-cycle engine 100 can achieve a higher output. Also, since the cylinder 110 is separated from a crank chamber (not shown) stowing the cross head, fouling deterioration of lubricant oil in the crank chamber can be limited even when low quality fuel oil is used.

The pilot injection valve 114 is provided at the cylinder head 110a above a top dead center of the piston 112 which is one end of the cylinder 110 in a stroke direction and injects an appropriate amount of fuel oil at a desired time in an engine cycle. Such fuel oil spontaneously ignites due to heat from the combustion chamber 116 surrounded by the cylinder head 110a, a cylinder liner in the cylinder block 110b, and the piston 112 and burns in a short period of time to significantly increase a temperature of the combustion chamber 116. For this reason, a fuel gas can reliably burn at a desired timing.

The exhaust port 118 is an opening provided at a top section of the cylinder head 110a above the top dead center of the piston 112, that is, a side of one end of the cylinder 110 in the stroke direction of the piston 112, and is opened and closed to discharge a burned exhaust gas generated in the cylinder 110. The exhaust port 118 communicates with the exhaust passage 136. FIG. 1 shows a part of the exhaust passage 136. The exhaust passage 136 will be described in detail below.

The exhaust valve driving device 120 vertically slides the first exhaust valve 124 at a predetermined timing according to control of the exhaust control unit 154, which will be described below, and opens and closes the exhaust port 118.

The sensor 122 is constituted as an O₂ sensor. The sensor 122 is disposed in the exhaust passage 136 and detects an oxygen concentration in a gas in the exhaust passage 136 to output the oxygen concentration to the exhaust control unit 154.

The scavenge ports 126 are holes penetrating from an inner circumferential surface of a side of the other end of the cylinder 110 in the stroke direction of the piston 112 (an inner circumferential surface of the cylinder block 110b) to an outer circumferential surface thereof, and the plurality of scavenge ports are provided to be separated from each other over the entire circumference of the cylinder 110.

Also, an active gas is suctioned into the cylinder 110 from the scavenge ports 126 according to a sliding motion of the piston 112. Such an active gas contains an oxidizing agent such as oxygen and ozone or a mixed gas thereof (for example, air). The active gas (for example, air) pressurized by a compressor C of a supercharger 138, which will be described below, is sealed in the scavenge chamber 128, and the active gas is suctioned from the scavenge ports 126 due to a differential pressure between the scavenge chamber 128 and the inside of the cylinder 110. A pressure of the scavenge chamber 128 can be substantially constant, but pressure gauges are provided at the scavenge ports 126 when the pressure of the scavenge chamber 128 varies and may control other parameters such as an injection quantity of the fuel gas according to measured values thereof.

The first fuel injection units 130 are a plurality of openings provided to be separated in a circumferential direction on the inner circumferential surface of the cylinder 110 (between the exhaust port 118 and the scavenge ports 126). First fuel injection valves 130a are disposed in the first fuel injection units 130 and receive an instruction from the fuel injection control unit 152 to inject a fuel gas obtained by gasifying, for example, a liquefied natural gas (LNG). Thus, the fuel gas is supplied into the cylinder 110. Also, the fuel gas is not limited to LNG, and a gas obtained by gasifying, for example, a liquefied petroleum gas (LPG), a gas oil, a heavy oil, and so on can also be applied.

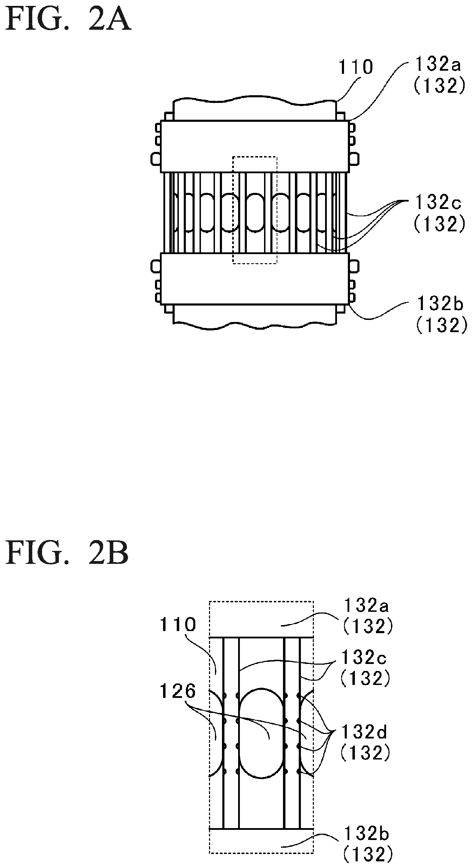

FIGS. 2A and 2B are views showing the second fuel injection unit 132, and FIG. 2A shows an enlarged view of a vicinity of the second fuel injection unit 132 in a side view of the cylinder 110. Also, FIG. 2B shows an enlarged view of a broken line portion of FIG. 2A.

As shown in FIG. 2A, the second fuel injection unit 132 includes storage tubes 132a and 132b formed separately from the cylinder 110. The storage tubes 132a and 132b are annular members surrounding an outside in a radial direction of the cylinder 110 in the circumferential direction. The storage tube 132a is disposed closer to the side of the one end in the stroke direction of the piston 112 than the scavenge ports 126 (an upper side of FIG. 2A), and the storage tube 132b is disposed closer to the side of the other end in the stroke direction of the piston 112 than the scavenge port 126 (a lower side of FIG. 2A).

Storage chambers which annularly extend are formed in the storage tubes 132a and 132b, and the fuel gas is temporarily stored in the storage chambers.

Circulation tubes 132c are disposed between the storage tube 132a and the storage tube 132b, and both ends thereof are fixed to the storage tube 132a and the storage tube 132b. Also, tubes communicating with the storage tube 132a and tubes communicating with the storage tube 132b are alternately arranged as the circulation tubes 132c in the circumferential direction of the cylinder 110. In other words, one of adjacent circulation tubes 132c communicates with the storage tube 132a and the other communicates with the storage tube 132b. In addition, the fuel gas flowing in from the storage tube 132a or the storage tube 132b circulates in the circulation tubes 132c.

As shown in FIG. 2B, injection tubes 132d are formed in each of the circulation tubes 132c. The injection tubes 132d are holes communicating the inner circumferential surface of the circulation tube 132c with the outer circumferential surface thereof. Thus, the injection tubes 132d are located between adjacent scavenge ports 126 at the outside of the cylinder 110 in the radial direction. Also, the injection tubes 132d are opened in the circumferential direction of the cylinder 110 from the circulation tube 132c.

Also, the fuel gas is discharged from the injection tubes 132d of the second fuel injection unit 132 toward the active gas flowing toward the scavenge ports 126 from the scavenge chamber 128 when second fuel injection valves (not shown) are opened and the fuel gas is injected from the injection tubes 132d. In this case, a vortex occurs in the active gas in the vicinity of the scavenge ports 126, and it is possible to promote mixing of the active gas and the fuel gas due to the vortex.

Referring again to FIG. 1, the rotary encoder 134 is provided at a crank mechanism (not shown) and detects an angle signal of a crank (hereinafter referred to as a crank angle signal).

The governor 150 derives a fuel injection quantity based on an engine output instruction value input from a higher-order control device and the number of engine rotations according to the crank angle signal from the rotary encoder 134 and outputs the injection quantity to the fuel injection control unit 152.

The fuel injection control unit 152 controls the first fuel injection valves 130a and the second fuel injection valves based on information indicating the fuel injection quantity input from the governor 150 and the crank angle signal from the rotary encoder 134.

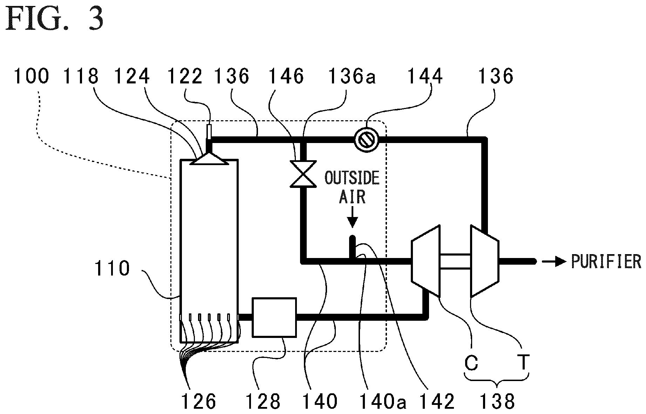

The exhaust control unit 154 outputs an exhaust valve operation signal to the exhaust valve driving device 120 based on a signal relevant to the fuel injection quantity from the fuel injection control unit 152 and the crank angle signal from the rotary encoder 134. Also, the exhaust control unit 154 outputs the exhaust valve operation signal to an exhaust valve driving device (not shown) driving a second exhaust valve 144 and a third exhaust valve 146, which will be described below, (see FIG. 3) based on an output value of the sensor 122.

FIG. 3 is a view showing a suction and exhaust system of the uniflow scavenging 2-cycle engine 100. Flows of the exhaust gas and the active gas are shown in FIG. 3 using thick lines.

The exhaust passage 136 is a flow path including the above-described exhaust port 118 and communicates with the inside of a turbine T of the supercharger 138 from the exhaust port 118. A circulation passage 140 is a flow path branching off from the exhaust passage 136 and communicates with the scavenge ports 126 of the cylinder 110 via the above-described scavenge chamber 128. Also, the inside of the compressor C of the supercharger 138 serves as a part of the circulation passage 140.

The sensor 122 is disposed closer to an upstream side (a side of the exhaust port 118) in the exhaust passage 136 than the communicating portion 136a of the exhaust passage 136 and the circulation passage 140.

A suction passage 142 communicates with the circulation passage 140 at an upstream side of the circulation passage 140 from the compressor C of the supercharger 138 and suctions external air (the active gas) to guide the external air into the circulation passage 140. A check valve (not shown) configured to prevent a counterflow to the suction passage 142 from the circulation passage 140 is disposed in a communicating portion 140a of the circulation passage 140 and the suction passage 142.

The second exhaust valve 144 is constituted as, for example, a butterfly valve and is provided at a downstream side of the exhaust passage 136 from the communicating portion 136a of the exhaust passage 136 and the circulation passage 140. The degree of opening of the second exhaust valve 144 is adjusted by the exhaust valve driving device (not shown) and varies (opens and closes) a degree of opening of the exhaust passage 136.

The third exhaust valve 146 is provided at an upstream side of the circulation passage 140 from the communicating portion 140a of the circulation passage 140 and the suction passage 142. The degree of opening of the third exhaust valve 146 is adjusted by the exhaust valve driving device (not shown) and opens and closes the circulation passage 140.

When the first exhaust valve 124 is opened while the second exhaust valve 144 is opened and the third exhaust valve 146 is closed, an exhaust gas generated due to a combustion operation in the cylinder 110 is discharged from cylinder 110 through the exhaust port 118, rotates the turbine T of the supercharger 138, and is purified by a purifier.

In this case, the compressor C rotates using rotation power of the turbine T, and the active gas is suctioned into the compressor C from the suction passage 142. The active gas is compressed by the compressor C and transmitted to the scavenge chamber 128. And then, the active gas is suctioned into the cylinder 110 from the scavenge ports 126.

When the third exhaust valve 146 is opened while the first exhaust valve 124 is opened and the exhaust gas flows through the exhaust passage 136, all or a part of the exhaust gas flows into the circulation passage 140. The exhaust gas flowing into the circulation passage 140 is mixed with the active gas, compressed by the compressor C, and transmitted to the scavenge chamber 128 of the cylinder 110. And then, the gas circulates into the cylinder 110 from the scavenge ports 126. As described above, the circulation passage 140 and the third exhaust valve 146 constitute an exhaust gas recirculation (EGR) system.

Operations of each control unit in the above-described engine cycle of the uniflow scavenging 2-cycle engine 100 will be described below.

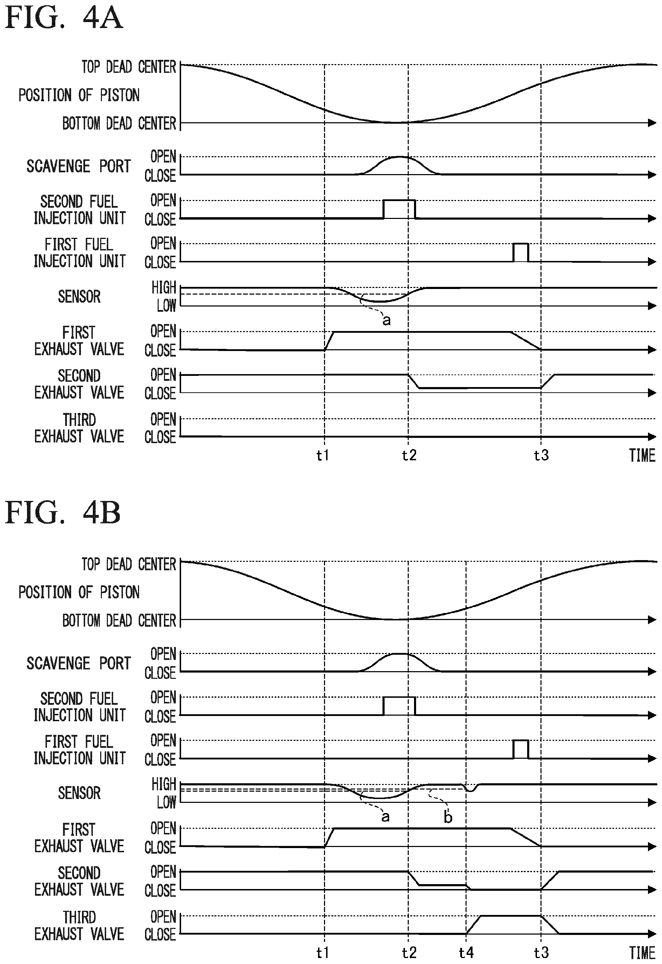

FIGS. 4A and 4B are views showing operations of each control unit according to crank angles. As shown in FIG. 4A, the exhaust port 118 and the scavenge ports 126 are in a closed state, and the combustion chamber 116 (the inside of the cylinder 110) is filled with the exhaust gas after a combustion stroke.

The exhaust control unit 154 opens the first exhaust valve 124 by means of the exhaust valve driving device 120 when the piston 112 descends to approach a bottom dead center due to an expansion pressure generated due to the combustion operation of the combustion chamber 116 (t1 shown in FIG. 4A). Thus, the exhaust gas is discharged from the exhaust port 118 to the exhaust passage 136, and an oxygen concentration in the exhaust passage 136 indicated by the output value of the sensor 122 is decreased.

Also, the scavenge ports 126 are opened according to the sliding motion of the piston 112 (between t1 and t2 of FIG. 4A). Thus, the active gas is suctioned from the scavenge ports 126. The fuel injection control unit 152 injects the fuel gas from the second fuel injection unit 132 based on information indicating the fuel injection quantity input from the governor 150, the number of engine rotations derived using the crank angle signal from the rotary encoder 134 and so on, while the scavenge ports 126 are opened.

In this case, a part of the active gas suctioned into the cylinder 110 flows out into the exhaust passage 136 from the exhaust port 118. For this reason, the oxygen concentration in the exhaust passage 136 is increased. When the oxygen concentration indicated by the output value of the sensor 122 becomes less than a first threshold value a (a threshold value) and then exceeds the first threshold value a again (t2 shown in FIG. 4A), the exhaust control unit 154 reduces the degree of opening of the second exhaust valve 144. After that, the exhaust control unit 154 keeps the degree of opening of the second exhaust valve 144 constant.

As a result, a flow velocity of the exhaust gas flowing out from the exhaust port 118 is decreased. For this reason, the fuel gas injected from the second fuel injection unit 132 can be suppressed from being discharged from the exhaust port 118.

Subsequently, injection of the fuel gas from the second fuel injection unit 132 stops, and the scavenge ports 126 are closed. And then, the fuel injection control unit 152 injects the fuel gas into the cylinder 110 from the first fuel injection units 130 based on information indicating a fuel injection amount and the number of engine rotations derived using the crank angle signal and so on, as in the second fuel injection unit 132.

The active gas and the fuel gas flowing into the cylinder 110 from the first fuel injection units 130 and the second fuel injection unit 132 increase while forming a swirl for promoting mixing of the active gas and the fuel gas and push out the exhaust gas in the combustion chamber 116 (inside the cylinder 110) from the exhaust port 118.

And then, the exhaust control unit 154 opens the first exhaust valve 124 and opens the exhaust port 118 (t3 shown in FIG. 4A). The exhaust control unit 154 opens the first exhaust valve 124 and returns the degree of opening of the second exhaust valve 144 to a fully opened state.

The fuel gas burns and the piston 112 descends accordingly due to the expansion pressure in the combustion chamber 116.

As the fuel gas burns in the combustion chamber 116 in this way, combustion, expansion, exhaust, intake, and compression strokes are iterated as described above.

The exhaust control unit 154 controls each of the exhaust valve driving devices of the first exhaust valve 124 and the second exhaust valve 144 and opens and closes the first exhaust valve 124 and the second exhaust valve 144 as will be described below. In other words, the degree of opening of the second exhaust valve 144 is increased (t3 shown in FIG. 4A) before the first exhaust valve 124 is opened (here, immediately after the first exhaust valve 124 is closed in one previous cycle), and the degree of opening of the second exhaust valve 144 is decreased (t2 shown in FIG. 4A) after the first exhaust valve 124 is opened in the next cycle (t1 shown in FIG. 4A).

For this reason, the degree of opening of the second exhaust valve 144 is increased so that the exhaust gas can be efficiently discharged immediately after the first exhaust valve 124 is opened, and the degree of opening of the second exhaust valve 144 is decreased and the flow velocity of the exhaust gas is reduced so that the fuel gas can be suppressed from being discharged from the exhaust port 118.

As a result, injection periods of time of the fuel gas can be sufficiently secured in the first fuel injection units 130 and the second fuel injection unit 132. For this reason, the fuel gas can be dispersed in the cylinder 110 without locally concentrating the fuel gas in the cylinder 110 (the combustion chamber 116) due to a reason in which the fuel gas is intensively injected in a short period of time, etc.

In FIG. 4A, a case in which the exhaust control unit 154 keeps the degree of opening of the second exhaust valve 144 constant during a period from after the degree of opening of the second exhaust valve 144 is decreased and the first exhaust valve 124 is closed until the degree of opening of the second exhaust valve 144 is increased again has been described. However, the degree of opening of the second exhaust valve 144 may be gradually increased, and the degree of opening of the second exhaust valve 144 may be gradually decreased during the period.

As shown in FIG. 4A, the exhaust control unit 154 controls such that adjustment rates of the degree of opening of the second exhaust valve 144 are approximately the same when the degree of opening of the second exhaust valve 144 is increased and decreased. However, an opening and closing rate of the second exhaust valve 144 when the degree of opening thereof is increased may be slower than that of the second exhaust valve 144 when the degree of opening thereof is decreased, and the opening and closing rates thereof may be reversed.

In FIG. 4A, a case in which the fuel gas can be prevented from flowing out into the exhaust port 118 by reducing the degree of opening of the second exhaust valve 144 has been described. In FIG. 4B, a process of a case in which the fuel gas flows out into the exhaust port 118 will be described. In FIG. 4B, an overlapping description will be omitted because the same process as in FIG. 4A is performed until a time t2.

As shown in FIG. 4B, the exhaust control unit 154 reduces the degree of opening of the second exhaust valve 144 when the oxygen concentration exceeds the first threshold value a (t2 shown in FIG. 4B). Thus, the flow velocity of the exhaust gas flowing out into the exhaust passage 136 from the cylinder 110 is reduced, but the fuel gas can still flow out into the exhaust passage 136.

The oxygen concentration in the exhaust passage 136 is increased due to the active gas flowing in, but the oxygen concentration is decreased again when the fuel gas flows out into the exhaust passage 136. The oxygen concentration is decreased due to a decrease of a proportion of oxygen occupied in the total gas in the exhaust passage 136 corresponding to a volume of the fuel gas flowing out into the exhaust passage 136.

Therefore, the exhaust control unit 154 determines that the fuel gas flows out into the exhaust passage 136 when the oxygen concentration indicated by the output value of the sensor 122 exceeds a second threshold value b and then becomes less than the second threshold value b a single time (t4 shown in FIG. 4B). Here, the second threshold value b is larger than the first threshold value a. And then, the exhaust control unit 154 fully closes the second exhaust valve 144 and opens the third exhaust valve 146.

Thus, the fuel gas flowing out into the exhaust passage 136 flows into the circulation passage 140 together with the active gas and the exhaust gas and circulates into the cylinder 110 from the scavenge chamber 128. For this reason, flowing out of the fuel gas to outside air can be prevented, and fuel consumption can be improved by burning the fuel gas without being wasted.

In the above-described embodiment, a case in which the fuel gas before being mixed with the active gas is injected from the second fuel injection unit 132 has been described. However, the fuel gas and the active gas may be premixed in the fuel injection units. Such a fuel injection unit 232 will be described below.

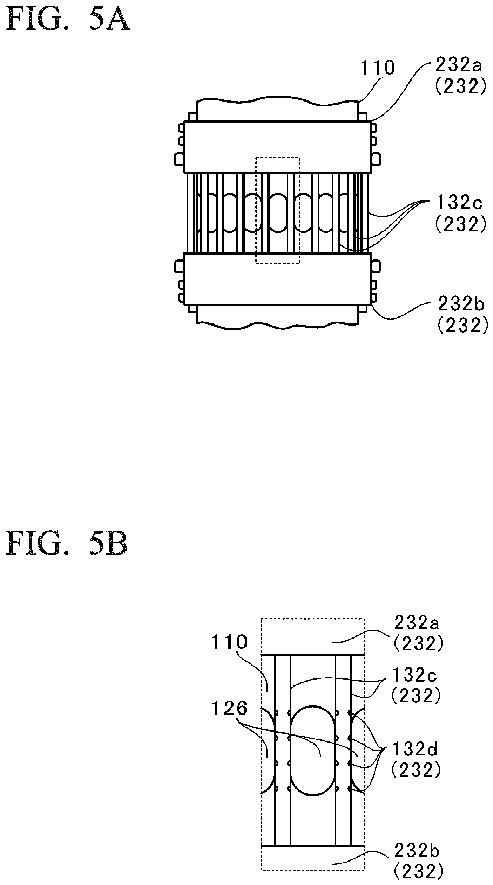

FIGS. 5A and 5B are views showing the second fuel injection unit 232 in a modified example of the present invention, and FIG. 5A shows an enlarged view of the vicinity of the second fuel injection unit 232 in a side view of the cylinder 110. Also, FIG. 5B shows an enlarged view of a broken line portion of FIG. 5A.

As shown in FIG. 5A, the second fuel injection unit 232 includes mixing tubes 232a and 232b formed separately from the cylinder 110. The mixing tubes 232a and 232b are annular members surrounding an outside in a radial direction of the cylinder 110 in a circumferential direction. The mixing tube 232a is disposed closer to the side of one end in the stroke direction of the piston 112 than the scavenge ports 126 (the upper side of FIG. 2A), and the mixing tube 232b is disposed closer to the side of the other end in the stroke direction of the piston 112 than the scavenge ports 126 (the lower side of FIG. 2A).

Mixing chambers which annularly extend are formed in the mixing tubes 232a and 232b, and the fuel gas and the active gas are mixed and a premixed gas is generated in the mixing chambers.

One of adjacent circulation tubes 132c communicates with the mixing tube 232a and the other communicates with the mixing tube 232b. Also, the premixed gas flowing in from the mixing tube 232a or the mixing tube 232b circulates in the circulation tubes 132c.

Also, the premixed gas is discharged from the injection tubes 132d of the second fuel injection unit 232 toward the active gas flowing toward the scavenge ports 126 from the scavenge chamber 128 when second fuel injection valves (not shown) are opened and the premixed gas is injected from the injection tubes 132d shown in FIG. 5B.

In the above-described embodiment, a case in which the exhaust control unit 154 controls the degrees of opening of the second exhaust valve 144 and the third exhaust valve 146 based on the oxygen concentration in the exhaust passage 136 indicated by the output value of the sensor 122 has been described. However, the exhaust control unit 154 may control the degrees of opening of the second exhaust valve 144 and the third exhaust valve 146 based on one or more parameters among parameters such as the output value of the sensor 122, a scavenging pressure, an exhaust pressure, the crank angle signal from the rotary encoder 134, the number of engine rotations, a fuel injection start timing, a fuel injection period of time, and the fuel injection quantity. Also, the degrees of opening of the second exhaust valve 144 and the third exhaust valve 146 may be controlled based on a map obtained by associating one or more parameters among those parameters with the degrees of opening of the second exhaust valve 144 and the third exhaust valve 146.

In addition, in the above-described embodiment, a case in which the third exhaust valve 146 and the circulation passage 140 are provided has been described, but the third exhaust valve 146 and the circulation passage 140 are not necessary components.

In the above-described embodiment, a case in which the second threshold value b is larger than the first threshold value a has been described. However, the second threshold value b may be smaller than the first threshold value a, and the first threshold value a may be equal to the second threshold value b.

In the above-described embodiment, a case in which the uniflow scavenging 2-cycle engine 100 includes both of the first fuel injection units 130 and the second fuel injection unit 132 has been described. However, the uniflow scavenging 2-cycle engine 100 may include only one of the first fuel injection units 130 and the second fuel injection unit 132.

The preferred embodiment of the present invention has been described above with reference to the accompanying drawings, but the present invention is not limited to the above embodiment. A person skilled in the art may find various alterations and modifications within the scope of the appended claims, and it should be understood that they will naturally come under the technical scope of the present invention.

### [Industrial Applicability]

The present invention can be used for a uniflow scavenging 2-cycle engine which burns a fuel gas.

### [Reference Signs List]

100 Uniflow scavenging 2-cycle engine
110 Cylinder
112 Piston
116 Combustion chamber
118 Exhaust port
122 Sensor
124 First exhaust valve
126 Scavenge port
136 Exhaust passage
136a Communicating portion
140 Circulation passage
144 Second exhaust valve
146 Third exhaust valve
152 Fuel injection control unit (control unit)
154 Exhaust control unit (control unit)

## Claims

1. A uniflow scavenging 2-cycle engine (100) comprising:
a cylinder (100) having a combustion chamber (116) formed therein;
a piston (112) configured to slide in the cylinder (110);
an exhaust port (118) provided at a side of one end of the cylinder (110) in a stroke direction of the piston (112);
a first exhaust valve (124) configured to open and close the exhaust port (118);
an exhaust passage (136) communicating with the exhaust port (118) and through which an exhaust gas generated due to a combustion operation in the cylinder (110) is guided from the exhaust port (118); and
a second exhaust valve (144) provided in the exhaust passage (136) and configured to vary a degree of opening of the exhaust passage (136); and
a control unit (154) configured to control the first exhaust valve (124) and the second exhaust valve (144) to reduce a degree of opening of the second exhaust valve (144) after the first exhaust valve (124) is opened,
**characterized in that**
the uniflow scavenging 2-cycle engine (100) further comprises a sensor (122) provided in the exhaust passage (136) and configured to measure an oxygen concentration contained in the exhaust gas, and
the control unit (154) reduces the degree of opening of the second exhaust valve (144) when the oxygen concentration measured by the sensor increases to exceed a threshold value after the first exhaust valve (124) is opened.

2. The uniflow scavenging 2-cycle engine (100) according to claim 1, further comprising:
scavenge ports (126) provided at a side of the other end of the cylinder (110) in the stroke direction of the piston (112) and configured to suction an active gas to the combustion chamber (116) according to a sliding motion of the piston (112);
a circulation passage (140) communicating the exhaust passage (136) with the scavenge ports (126) and configured to circulate a part of the exhaust gas circulating in the exhaust passage (136) from the scavenge ports (126) into the cylinder (110); and
a third exhaust valve (146) configured to open and close the circulation passage (140),
wherein the second exhaust valve (144) is provided at a downstream side of the exhaust passage (136) from a communicating portion (136a) of the exhaust passage (136) and the circulation passage (140).

## Patentansprüche

1. Zweitaktmotor mit Gleichstromspülung (100), der Folgendes aufweist:
einen Zylinder (100), in dem eine Brennkammer (116) ausgebildet ist;
einen Kolben (112), der dazu konfiguriert ist, in dem Zylinder (110) zu gleiten;
einen Abgasanschluss (118), der auf einer Seite eines Endes des Zylinders (110) in einer Hubrichtung des Kolbens (112) bereitgestellt ist;
ein erstes Abgasventil (124), das dazu konfiguriert ist, den Abgasanschluss (118) zu öffnen und zu schließen;
einen Abgasdurchgang (136), der mit dem Abgasanschluss (118) in Verbindung steht und durch den ein Abgas, das aufgrund eines Brennvorgangs in dem Zylinder (110) erzeugt wird, von dem Abgasanschluss (118) geleitet wird; und
ein zweites Abgasventil (144), das in dem Abgasdurchgang (136) bereitgestellt ist und dazu konfiguriert ist, einen Grad der Öffnung des Abgasdurchgangs (136) zu variieren; und
eine Steuerungseinheit (154), die dazu konfiguriert ist, das erste Abgasventil (124) und das zweite Abgasventil (144) zu steuern, um einen Grad der Öffnung des zweiten Abgasventils (144) zu reduzieren, nachdem das erste Abgasventil (124) geöffnet ist,
**dadurch gekennzeichnet, dass**
der Zweitaktmotor mit Gleichstromspülung (100) ferner einen Sensor (122) aufweist, der in dem Abgasdurchgang (136) bereitgestellt ist und dazu konfiguriert ist, eine in dem Abgas enthaltene Sauerstoffkonzentration zu messen, und
die Steuerungseinheit (154) den Grad der Öffnung des zweiten Abgasventils (144) dann reduziert, wenn die Sauerstoffkonzentration, die durch den Sensor gemessen wird, so ansteigt, dass sie einen Schwellenwert überschreitet, nachdem das erste Abgasventil (124) geöffnet ist.

2. Zweitaktmotor mit Gleichstromspülung (100) nach Anspruch 1, der ferner Folgendes aufweist:
Spülanschlüsse (126), die auf einer Seite des anderen Endes des Zylinders (110) in der Hubrichtung des Kolbens (112) bereitgestellt sind und dazu konfiguriert sind, ein Aktivgas gemäß einer Gleitbewegung des Kolbens (112) zu der Brennkammer (116) anzusaugen;
einen Zirkulationsdurchgang (140), der den Abgasdurchgang (136) mit den Spülanschlüssen (126) verbindet und dazu konfiguriert ist, einen Teil des Abgases, das in dem Abgasdurchgang (136) zirkuliert, von den Spülanschlüssen (126) in den Zylinder (110) zu zirkulieren; und
ein drittes Abgasventil (146), das dazu konfiguriert ist, den Zirkulationsdurchgang (140) zu öffnen und zu schließen,
wobei das zweite Abgasventil (144) auf einer von einem Verbindungsabschnitt (136) des Abgasdurchgangs (186) und dem Zirkulationsdurchgang (140) stromabwärtigen Seite des Abgasdurchgangs (136) bereitgestellt ist.

## Revendications

1. Moteur à deux temps à balayage équicourant (100) comprenant :
un cylindre (100) à l'intérieur duquel est formée une chambre de combustion (116) ;
un piston (112) configuré pour coulisser dans le cylindre (110) ;
un orifice d'échappement (118) prévu au niveau d'un côté d'une extrémité du cylindre (110) dans une direction de course du piston (112) ;
une première soupape d'échappement (124) configurée pour ouvrir et fermer l'orifice d'échappement (118) ;
un passage d'échappement (136) communiquant avec l'orifice d'échappement (118) et à travers lequel un gaz d'échappement généré en raison d'une opération de combustion dans le cylindre (110) est guidé à partir de l'orifice d'échappement (118) ; et
une deuxième soupape d'échappement (144) prévue dans le passage d'échappement (136) et configurée pour modifier un degré d'ouverture du passage d'échappement (136) ; et
une unité de commande (154) configurée pour commander la première soupape d'échappement (124) et la deuxième soupape d'échappement (144) pour réduire un degré d'ouverture de la deuxième soupape d'échappement (144) après que la première soupape d'échappement (124) a été ouverte,
**caractérisé en ce que**
le moteur à deux temps à balayage équicourant (100) comprend en outre un capteur (122) prévu dans le passage d'échappement (136) et configuré pour mesurer une concentration d'oxygène contenue dans le gaz d'échappement, et
l'unité de commande (154) réduit le degré d'ouverture de la deuxième soupape d'échappement (144) lorsque la concentration d'oxygène mesurée par le capteur augmente pour dépasser une valeur seuil après que la première soupape d'échappement (124) a été ouverte.

2. Moteur à deux temps à balayage équicourant (100) selon la revendication 1, comprenant en outre :
des orifices de balayage (126) prévus au niveau d'un côté de l'autre extrémité du cylindre (110) dans la direction de course du piston (112) et configurés pour l'aspiration d'un gaz actif vers la chambre de combustion (116) selon un mouvement de coulissement du piston (112) ;
un passage de circulation (140) faisant communiquer le passage d'échappement (136) avec les orifices de balayage (126) et configuré pour faire circuler une partie du gaz d'échappement circulant dans le passage d'échappement (136) à partir des orifices de balayage (126) dans le cylindre (110) ; et
une troisième soupape d'échappement (146) configurée pour ouvrir et fermer le passage de circulation (140),
dans lequel la deuxième soupape d'échappement (144) est prévue au niveau d'un côté en aval du passage d'échappement (136) à partir d'une portion de communication (136a) du passage d'échappement (136) et du passage de circulation (140).
